(19) Europäisches Patentamt
European Patent Office
Office européen des brevets

(11) EP 1 328 839 B1

(12) # FASCICULE DE BREVET EUROPEEN

(45) Date de publication et mention de la délivrance du brevet:
**07.06.2006 Bulletin 2006/23**

(21) Numéro de dépôt: **02701385.3**

(22) Date de dépôt: **01.02.2002**

(51) Int Cl.:
***G02C 7/02*** *(2006.01)*

(86) Numéro de dépôt international:
**PCT/FR2002/000399**

(87) Numéro de publication internationale:
**WO 2002/063377 (15.08.2002 Gazette 2002/33)**

(54) **LENTILLE OPHTALMIQUE MULTIFOCALE PROGRESSIVE A VARIATION DE PUISSANCE RAPIDE**

MULTIFOKALE PROGRESSIVE OPHTHALMISCHE LINSE MIT SCHNELLER ÄNDERUNG DER BRECHKRAFT

PROGRESSIVE MULTIFOCAL OPHTHALMIC LENS WITH FAST POWER VARIATION

(84) Etats contractants désignés:
**AT BE CH CY DE DK ES FI FR GB GR IE IT LI LU MC NL PT SE TR**

(30) Priorité: **02.02.2001 FR 0101411**

(43) Date de publication de la demande:
**23.07.2003 Bulletin 2003/30**

(73) Titulaire: **ESSILOR INTERNATIONAL COMPAGNIE GENERALE D'OPTIQUE**
**94227 Charenton cédex (FR)**

(72) Inventeurs:
- **AHSBAHS, Françoise**
  **F-94100 Saint Maur des Fosses (FR)**
- **DEVIE, Pierre**
  **F-94310 Orly (FR)**

(74) Mandataire: **Hirsch & Associés**
**58, avenue Marceau**
**75008 Paris (FR)**

(56) Documents cités:
**EP-A- 1 022 601**
**US-A- 5 270 745**
**US-A- 5 719 658**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 328 839 B1

Printed by Jouve, 75001 PARIS (FR)

## Description

La présente invention concerne les lentilles ophtalmiques multifocales progressives. De telles lentilles sont bien connues ; elles fournissent une puissance optique variant continûment en fonction de la position sur la lentille ; typiquement, lorsqu'une lentille multifocale est montée dans une monture, la puissance dans le bas de la lentille est supérieure à la puissance dans la haut de la lentille.

Dans la pratique, les lentilles multifocales comprennent souvent une face asphérique, et une face qui est sphérique ou torique, usinée pour adapter la lentille à la prescription du porteur. Il est donc habituel de caractériser une lentille multifocale par les paramètres surfaciques de sa surface asphérique, à savoir en tout point une sphère moyenne S et un cylindre.

La sphère moyenne S est définie par la formule suivante :

$$\bar{S}=\frac{n-1}{2}\left(\frac{1}{R_1}+\frac{1}{R_2}\right)$$

avec $R_1$ et $R_2$ les rayons de courbure minimum et maximum, exprimés en mètres, et n l'indice de réfraction du matériau de la lentille.

Le cylindre est donné, avec les mêmes conventions, par la formule :

$$C=(n-1)\left|\frac{1}{R_1}-\frac{1}{R_2}\right|$$

On appelle "lentilles progressives" de telles lentilles multifocales adaptées à la vision à toutes les distances. Ces lentilles comprennent habituellement une zone de vision de loin, une zone de vision de près, une zone de vision intermédiaire et une méridienne principale de progression traversant ces trois zones. Le document FR-A-2 699 294, auquel on pourra se référer pour plus de détails, décrit dans son préambule les différents éléments d'une lentille ophtalmique multifocale progressive, ainsi que les travaux menés par la demanderesse pour améliorer le confort des porteurs de telles lentilles. En résumé, on appelle zone de vision de loin la partie supérieure de la lentille, qui est utilisée par le porteur pour regarder loin. On appelle zone de vision de près la partie inférieure de la lentille, qui est utilisée par le porteur pour regarder près, par exemple pour lire. La zone s'étendant entre ces deux zones est appelée zone de vision intermédiaire.

On appelle alors addition la différence de sphère moyenne entre un point de référence de la zone de vision de près, et un point de référence de la zone de vision de loin. Ces deux points de référence sont habituellement choisis sur la méridienne principale de progression définie plus bas.

La puissance dans les différentes zones de vision de loin, intermédiaire et de près, indépendamment de leur position sur le verre, est fixée par la prescription. Celle-ci peut comprendre uniquement une valeur de puissance en vision de près, ou une valeur de puissance en vision de loin et une addition, et éventuellement une valeur d'astigmatisme avec son axe et de prisme.

Pour les lentilles progressives, on appelle méridienne principale de progression une ligne qui est utilisée dans la définition par optimisation de la lentille, et qui est représentative de la stratégie d'utilisation de la lentille par un porteur moyen. La méridienne principale de progression est souvent sur la surface multifocale une ligne ombilique, i. e. dont tous les points présentent un cylindre nul. Diverses définitions ont été proposées pour la méridienne principale de progression.

Dans une première définition, la méridienne principale de progression est constituée de l'intersection de la surface asphérique de la lentille et du regard d'un porteur moyen lorsqu'il regarde devant lui des objets dans un plan méridien, à différentes distances ; dans ce cas, la méridienne est obtenue à partir de définitions de posture du porteur moyen - point de rotation de l'oeil, position de la monture, angle de la monture avec la verticale, distance en vision de près, etc. ; ces divers paramètres permettent de dessiner sur la surface de la lentille la méridienne. FR-A-2 753 805 est un exemple d'une méthode de ce type, dans lequel la méridienne est obtenue par tracé de rayons, en tenant compte du rapprochement du plan de lecture ainsi que des effets prismatiques.

Une deuxième définition consiste à définir la méridienne à partir des caractéristiques surfaciques, et notamment des lignes isocylindre ; dans ce contexte, on appelle ligne d'isocylindre pour une valeur donnée du cylindre l'ensemble des points présentant cette valeur du cylindre. On trace sur la lentille les segments horizontaux reliant les lignes d'isocylindre 0,50 dioptrie, et on considère les milieux de ces segments. La méridienne est voisine de ces milieux. On peut ainsi considérer une méridienne formée de trois segments de droite passant au mieux par les milieux des segments horizontaux reliant les deux lignes d'isocylindre. Cette deuxième définition présente l'avantage de permettre de retrouver la méridienne à partir d'une mesure des caractéristiques surfaciques de la lentille, sans connaissance a priori de la stratégie d'optimisation suivie. Avec cette définition, on peut aussi considérer les lignes d'isocylindre pour la moitié de l'addition, au lieu de considérer les lignes d'isocylindre 0,50 dioptrie.

Une troisième définition de la méridienne est proposée dans les brevets de la demanderesse. Pour mieux satisfaire les besoins visuels des presbytes et améliorer le confort des lentilles multifocales progressives, la demanderesse a proposé d'adapter la forme de la méridienne principale de progression, en fonction de l'addition de puissance, voir les demandes de brevet FR-A-2 683 642 et FR-A-2 683 643. La méridienne dans ces demandes est formée de trois segments formant une ligne brisée. En partant du haut de la lentille, le premier segment est vertical et présente comme extrémité inférieure la croix de montage (définie ci-dessous). Le deuxième segment a comme extrémité supérieure la croix de montage, et forme avec la verticale un angle $\alpha$ fonction de l'addition, par exemple $\alpha = f_1(A) = 1{,}574.A^2-3{,}097.A+12{,}293$. Le deuxième segment présente une extrémité inférieure à une hauteur qui est aussi fonction de l'addition ; cette hauteur h est donnée par exemple par la fonction $h = f_2(A) = 0{,}340.A^2-0{,}425.A-6{,}422$ ; cette formule donne la hauteur en millimètres, dans un repère centré sur le centre de la lentille. Le troisième segment a une extrémité supérieure confondue avec l'extrémité inférieure du deuxième segment, et forme avec la verticale un angle $\omega$ fonction de l'addition, par exemple $\omega = f_3(A) = 0{,}266.A^2-0{,}473.A+2{,}967$. Dans cette formule comme dans les précédentes, les coefficients numériques ont des dimensions adaptées pour que les angles soient exprimés en degrés et la hauteur en mm, pour une addition en dioptrie. On peut bien entendu utiliser d'autres relations que celles-ci pour définir une méridienne en trois segments.

Est couramment matérialisé sur les lentilles ophtalmiques, progressives ou non, un point appelé croix de montage, qui est utilisé par l'opticien pour le montage des lentilles dans une monture. L'opticien à partir des caractéristiques anthropométriques du porteur - écart pupillaire et hauteur par rapport à la monture - procède à l'usinage de la lentille par débordage, en utilisant comme repère la croix de montage. Dans les lentilles commercialisées par la demanderesse, la croix de montage est située 4 mm au-dessus du centre géométrique de la lentille ; celui-ci est généralement situé au milieu des micro-gravures. Elle correspond pour une lentille correctement positionnée dans une monture à une direction horizontale du regard, pour un porteur ayant la tête droite.

La demande de brevet français déposée le 16 mai 2000 sous le numéro 00 06 214 soulève le problème du montage des lentilles multifocales progressives dans les montures de petite taille : il arrive, lors du montage de telles lentilles dans des montures de petite taille, que la partie inférieure de la zone de vision de près soit supprimée lors de l'usinage du verre. Le porteur dispose alors d'une vision correcte en vision de loin et en vision intermédiaire, mais d'une zone de vision de près de taille trop réduite. Il a tendance à utiliser pour la vision de près la partie inférieure de la zone de vision intermédiaire. Ce problème est particulièrement aigu du fait de la tendance de la mode à des montures de petite taille.

Un autre problème que rencontrent les porteurs de lentilles multifocales progressives est la fatigue en cas de travail prolongé en vision de près ou en vision intermédiaire. La zone de vision de près d'une lentille progressive se trouve en effet dans le bas de la lentille, et l'utilisation prolongée de la zone de vision de près peut provoquer chez certains porteurs une fatigue.

Un dernier problème est l'adaptation des porteurs aux lentilles. Il est connu que les porteurs et notamment les jeunes presbytes ont couramment besoin d'une période d'adaptation à des lentilles progressives, avant d'utiliser de façon appropriée les différentes zones du verre pour les activités correspondantes. Le problème d'adaptation se rencontre aussi pour les anciens porteurs de lentilles bifocales ; ces lentilles présentent une pastille de vision de près, dont la partie supérieure est généralement située à 5 mm sous le centre géométrique de la lentille. Or, dans les verres progressifs classiques, la zone de vision de près est généralement située plus bas ; même s'il est difficile de fixer exactement la limite entre la zone de vision intermédiaire et la zone de vision de près, un porteur subirait une fatigue moins importante en utilisant des lentilles progressives en vision de près à 5 mm en dessous de la croix de montage.

L'invention propose une solution à ces problèmes en fournissant une lentille de conception optique généraliste adaptée à toutes les situations. Elle fournit en particulier une lentille susceptible d'être montée dans des montures de petites dimensions, sans que la zone de vision de près ne soit réduite. Elle améliore aussi le confort des porteurs utilisant de façon prolongée la zone de vision de près ou la zone de vision intermédiaire. Elle rend aussi plus facile l'adaptation aux lentilles progressives de jeunes presbytes et d'anciens porteurs de lentilles bifocales. Plus généralement, l'invention est applicable à toute lentille présentant une variation de puissance rapide.

Plus précisément, l'invention propose une lentille ophtalmique multifocale progressive, comportant une surface asphérique avec en tout point une sphère moyenne et un cylindre, une zone de vision de loin, une zone de vision intermédiaire et une zone de vision de près, une méridienne principale de progression traversant ces trois zones, une addition égale à la différence de sphère moyenne entre un point de référence de la zone de vision de près et un point de référence de la zone de vision de loin, une longueur de progression inférieure à 12 mm, la longueur de progression étant égale à la distance verticale entre une croix de montage et le point de la méridienne où la sphère moyenne est supérieure de 85 % de l'addition à la sphère au point de référence pour la vision de loin ; pour cette lentille, le rapport entre

- l'intégrale du produit du cylindre par la norme du gradient de la sphère, sur un cercle de 40 mm de diamètre centré sur le centre géométrique de la lentille, d'une part et
- le produit de l'aire de ce cercle, de l'addition et de la valeur maximale de la norme du gradient de la sphère sur la partie de la méridienne comprise dans ce cercle, d'autre part, est inférieur à 0,14.

L'invention propose aussi une lentille ophtalmique multifocale progressive, comportant une surface asphérique avec en tout point une sphère moyenne et un cylindre, une zone de vision de loin, une zone de vision intermédiaire et une zone de vision de près, une méridienne principale de progression traversant ces trois zones, une addition égale à la différence de sphère moyenne entre un point de référence de la zone de vision de près et un point de référence de la zone de vision de loin, une longueur de progression inférieure à 12 mm, la longueur de progression étant égale à la distance verticale entre une croix de montage et le point de la méridienne où la sphère moyenne est supérieure de 85 % de l'addition à la sphère au point de référence pour la vision de loin ; pour cette lentille, le rapport entre

- l'intégrale du produit du cylindre par la norme du gradient de la sphère, sur un cercle de 40 mm de diamètre centré sur le centre géométrique de la lentille, d'une part, et
- le produit de l'aire de ce cercle, de l'addition et de la valeur maximale de la norme du gradient de la sphère sur la partie de la méridienne comprise dans ce cercle, d'autre part,

est inférieur à 0,16 fois le rapport entre

- la valeur maximale de la norme du gradient de la sphère sur la partie de la méridienne comprise dans ce cercle ; et
- la valeur maximale de la norme du gradient de la sphère dans ce cercle.
  Dans un cas comme dans l'autre, il est possible que le rapport entre
- le produit du cylindre par la norme du gradient de la sphère, d'une part et
- le carré de l'addition d'autre part

soit inférieur à 0,08 $mm^{-1}$ en tout point d'un disque de 40 mm de diamètre centré sur le centre géométrique de la lentille, et que le cylindre dans la partie du disque située au-dessus d'une croix de montage soit inférieur à 0,5 fois l'addition.

Dans un mode de réalisation, la méridienne principale de progression est une ligne ombilique ; il peut aussi s'agir d'une ligne est sensiblement formée des milieux de segments horizontaux reliant les lignes formées des points de cylindre 0,5 dioptrie ; la méridienne peut enfin être formée de trois segments constituant une ligne brisée.

Dans ce dernier cas, il est avantageux que le premier segment soit vertical et présente comme extrémité inférieure la croix de montage. Le deuxième segment peut alors avoir comme extrémité supérieure la croix de montage, et former avec la verticale un angle $\alpha$ fonction de l'addition. L'angle $\alpha$ est avantageusement donné par $\alpha = f_1(A) = 1{,}574.A^2 - 3{,}097.A+12{,}293$, avec A l'addition.

Il est aussi possible que le deuxième segment présente une extrémité inférieure à une hauteur h qui est fonction de l'addition. Cette hauteur h de l'extrémité inférieure du deuxième segment peut être donnée en millimètres dans un repère centré sur le centre géométrique de la lentille par la fonction $h = f_2(A) = 0{,}340.A^2-0{,}425.A-6{,}422$, avec A l'addition.

Enfin, le troisième segment peut former avec la verticale un angle $\omega$ fonction de l'addition. Il est avantageux que cet angle soit donné par $\omega = f_3(A) = 0{,}266.A^2-0{,}473.A+2{,}967$, avec A l'addition.

D'autres caractéristiques et avantages de l'invention apparaîtront à la lecture de la description détaillée qui suit des modes de réalisation de l'invention, donnés à titre d'exemple uniquement et en références aux dessins qui montrent :

- figure 1, un graphe de sphère moyenne le long de la méridienne d'une lentille selon l'invention, d'addition une dioptrie ;
- figure 2, une carte de sphère moyenne de la lentille de la figure 1 ; et
- figure 3, une carte de cylindre de la lentille de la figure 1 ;
- figure 4, une représentation en trois dimensions du produit de la pente de sphère par le cylindre, pour la lentille de la figure 1 ;
- figure 5, une carte d'altitudes de la lentille des figures 1 à 4 ;
- figures 6 à 9, un graphe, des cartes et une représentation similaires à ceux des figures 1 à 4, pour une lentille de l'état de la technique.

Dans une première série de critères, l'invention propose de minimiser le produit en chaque point de la pente de sphère par le cylindre. Cette quantité est représentative des aberrations de la lentille : elle est manifestement nulle pour une lentille sphérique. La pente de sphère est représentative des variations locales de la sphère, et est d'autant plus faible que la lentille est "douce", i.e. présente une progression qui n'est pas trop brutale. Il est toutefois nécessaire pour assurer une progression que la pente de sphère ne présente pas des valeurs non-nulles sur toute la lentille, et notamment sur la méridienne principale de progression.

Le cylindre est représentatif de l'écart entre la surface locale et une surface sphérique ; il est intéressant qu'il reste faible dans la zone de la lentille utilisée pour la vision - ce qui en termes géométriques revient à "écarter" ou "élargir" les lignes d'isocylindre de la méridienne. Les variations de la sphère conduisent nécessairement à des variations du cylindre, et on ne peut minimiser le cylindre sur toute la surface de la lentille.

Le produit de la pente de sphère par le cylindre représente un équilibre entre le contrôle des pentes de sphère, et la volonté d'élargir les isocylindres. Pour une lentille dans laquelle le maximum de pente de sphère se trouverait sur la méridienne et dans laquelle la méridienne serait une ligne ombilique, le produit serait nul sur la méridienne, et présenterait une valeur faible autour de celle-ci. En s'éloignant de la méridienne, les valeurs de cylindre peuvent augmenter, mais le produit peut rester faible si la pente de sphère est elle-même faible : ceci est préférable dans les zones éloignées de la méridienne, puisque la progression de sphère n'est en fait fonctionnelle que dans le couloir de progression autour de la méridienne. Autrement dit, imposer une limite au produit de la pente de sphère par le cylindre sur la surface de la lentille implique de minimiser le cylindre dans la région fovéale, tout en minimisant la pente de sphère dans la région extra-fovéale. On assure à la fois une bonne vision fovéale, et une bonne vision périphérique. Le produit de la pente de sphère par le cylindre est donc une quantité représentative des aberrations sur la surface de la lentille.

Ce produit est minimisé sur la surface de la lentille à l'intérieur d'un cercle de diamètre 40 mm - soit un rayon de 20 mm autour du centre de la lentille ; ceci revient à exclure les zones de bord de la lentille, qui ne sont que peu ou pas utilisées par le porteur, surtout dans le cas de montures de petites dimensions. Généralement, en Europe, les montures sont considérées comme des montures de petite taille lorsque la hauteur de la monture (cote Boxing B, norme ISO8624 sur les systèmes de mesure des montures de lunettes) est inférieure à 35 mm. Aux Etats-Unis, on considère qu'une monture est de petite taille pour une cote Boxing B inférieure à 40 mm ; il s'agit là de valeurs moyennes.

L'invention propose aussi de normaliser ce produit, pour obtenir une grandeur qui n'est pas fonction de l'addition. Le facteur de normalisation fait intervenir l'addition. L'addition est un facteur adapté d'une part à la normalisation de la pente de sphère sur la surface de la lentille : la variation de la sphère entre le point de vision de loin et le point de vision de près est égale à l'addition, et la pente de sphère donc directement fonction de l'addition, pour des longueurs de progression données. L'addition est d'autre part un facteur adapté à la normalisation du cylindre : le cylindre est d'autant plus important que l'addition est importante - une lentille sphérique présentant un cylindre nul. Le carré de l'addition représente donc un facteur de normalisation adapté pour le produit du cylindre par la pente de sphère.

Ainsi, l'invention propose d'imposer une contrainte sur la quantité suivante :

$$\frac{\mathrm{Max}_{\mathrm{disque40}}(\mathrm{C.gradS})}{\mathrm{A}^2}$$

Dans cette formule, le gradient est défini de façon classique comme le vecteur dont les coordonnées suivant chaque axe sont respectivement égales aux dérivées partielles de la sphère moyenne suivant cet axe, et par abus de langage, on appelle gradient la norme du vecteur gradient, soit :

$$\mathrm{gradS} = \left\|\overrightarrow{grad}S\right\| = \sqrt{\left(\frac{\partial S}{\partial x}\right)^2 + \left(\frac{\partial S}{\partial y}\right)^2}$$

C est le cylindre ; on considère le maximum sur l'ensemble du disque de diamètre 40 mm centré sur le centre de la lentille ; au dénominateur apparaît comme facteur de normalisation le carré de l'addition.

Le rapport a la dimension de l'inverse d'une distance.

Il est avantageux que la valeur maximale de ce produit normalisé soit aussi faible que possible. Une limite supérieure de 0,08 $mm^{-1}$ est adaptée. Imposer une limite à une valeur maximale du produit revient bien sûr à limiter le produit pour tous les points du disque de diamètre 40 mm.

Cette limite sur la quantité normalisée se combine avec d'autres caractéristiques de la lentille. Le fait que la lentille est une lentille à progression courte peut s'écrire comme une contrainte sur la longueur de progression : la longueur de progression est représentative de la hauteur sur la lentille sur laquelle la sphère varie ; elle est d'autant plus faible que la sphère varie rapidement sur la lentille. La longueur de progression peut être définie comme la distance verticale entre la croix de montage et le point de la méridienne où la sphère moyenne est supérieure de 85 % de l'addition à la sphère moyenne au point de référence de la zone de vision de loin. L'invention propose donc que la longueur de progression soit inférieure à 12 mm.

L'invention propose aussi de minimiser la valeur maximale du cylindre, dans la partie supérieure de la lentille ; ceci revient à limiter le cylindre dans la partie supérieure de la lentille, c'est-à-dire à assurer que le cylindre reste faible dans la zone de vision de loin. La zone de vision de loin est donc dégagée. Quantitativement, cette condition s'exprime par une inégalité entre la valeur maximale du cylindre et la moitié de l'addition. Le choix d'une limite supérieure fonction de l'addition permet une normalisation de la condition, qui est applicable pour toutes les valeurs d'addition et de base d'une famille de lentilles.

La partie supérieure de la lentille est limité à la partie de la lentille située au-dessus de la croix de montage, à l'intérieur d'un cercle de diamètre 40 mm : il s'agit sensiblement de la zone de vision de loin, qui est limitée vers le bas par une horizontale passant la croix de montage ; elle est limité sur les bords ainsi que vers le haut par le cercle de diamètre 40 mm. Ce cercle correspond à la limite de la zone utile de la lentille, en vision fovéale ou extrafovéale.

Ces deux conditions assurent une vision de loin dégagée, une vision fovéale correcte, une vision extrafovéale adaptée, et ceci malgré la faible longueur de progression de la lentille.

Dans la suite de la présente description, on considère à titre d'exemple une lentille présentant une surface asphérique dirigée vers l'espace objet et une surface sphérique ou torique dirigée vers le porteur. On considère dans l'exemple une lentille destinée à l'oeil droit. La lentille pour l'oeil gauche peut être obtenue simplement par symétrie de cette lentille par rapport au plan vertical passant par le centre géométrique. On utilise un système de coordonnées orthonormé où l'axe des abscisses correspond à l'axe horizontal de la lentille et l'axe des ordonnées à l'axe vertical ; le centre O du repère est le centre géométrique de la surface asphérique de la lentille. Dans la suite, les axes sont gradués en millimètres. On considère dans la suite à titre d'exemple une lentille d'addition deux dioptries, et de base ou sphère au point de référence en vision de loin de 1,75 dioptries.

La figure 1 montre un graphe de sphère moyenne le long de la méridienne d'une lentille selon l'invention, d'addition une dioptrie ; on a porté en abscisse des dioptries, et en ordonnées les ordonnées y sur la lentille, en mm. La méridienne de consigne est définie comme expliqué plus haut, par trois segments de droite, dont la position est fonction de l'addition. Dans l'exemple, l'angle $\alpha$ entre le deuxième segment et la verticale vaut 10,8°, et son extrémité inférieure est à une ordonnée de -6,5 mm, i.e. se trouve à 6,5 mm en dessous du centre de la lentille. Le troisième segment forme avec la verticale un angle $\omega$ de 2,8°. La méridienne est orientée vers le côté nasal de la lentille. La méridienne obtenue après optimisation de la surface de la lentille, définie comme le lieu des milieux des segments horizontaux entre les lignes d'isocylindre de 0,5 dioptrie, est sensiblement confondue avec cette méridienne de consigne.

Le point de contrôle pour la vision de loin est à une ordonnée y = 8 mm sur la surface, et présente une sphère de 1,75 dioptries, et un cylindre de 0 dioptries. Le point de contrôle pour la vision de près est situé à une ordonnée y = -12 mm sur la surface, et présente une sphère de 2,75 dioptries, et un cylindre de 0 dioptries. Dans l'exemple, l'addition nominale de la lentille - une dioptrie - est égale à l'addition calculée comme différence entre la sphère moyenne des points de contrôle. On a représenté sur la figure 1 en traits pleins la sphère moyenne, et en traits interrompus les courbures principales $1/R_1$ et $1/R_2$.

La longueur de progression de la lentille de la figure 1 vaut 11,5 mm. De fait, une sphère moyenne de 1,75 + 0,85*1 = 2,60 dioptries est atteinte au point de la méridienne d'ordonnée -7,5 mm. Comme la croix de montage est à une ordonnée de 4 mm, la longueur de progression vaut bien 11,5 mm.

La figure 2 montre une carte de sphère moyenne de la lentille de la figure 1. La carte de la figure 2 montre la projection de la surface asphérique d'une lentille dans le plan (x, y) ; on y reconnaît le repère (x, y) défini plus haut, ainsi que la méridienne principale de progression. Les points de référence pour la vision de loin et pour la vision de près présentent des coordonnées respectives de (0 ; 8) et (2,5 ; -1,3). L'abscisse du point de contrôle pour la vision de près peut varier en fonction de l'addition, comme décrit dans FR-A-2 683 642 et FR-A-2 683 643.

Apparaissent sur la figure 2 les lignes d'isosphère, c'est-à-dire les lignes formées des points présentant la même valeur de sphère moyenne. On a porté les lignes pour des valeurs de sphère moyenne avec un pas de 0,25 dioptries, la sphère moyenne étant calculée par rapport à la sphère moyenne du point de référence pour la vision de loin. La figure montre la ligne d'isosphère 0 dioptrie, qui passe par le point de référence pour la vision de loin ; elle montre aussi les lignes d'isosphère 0,25 dioptrie, 0,5 dioptrie, 0,75 dioptrie et 1,00 dioptrie. La ligne d'isosphère 0,25 dioptrie est sensiblement horizontale et dans le milieu de la lentille ; la ligne d'isosphère 0,75 dioptrie se trouve dans la partie inférieure de la lentille, autour du point de référence pour la vision de près.

On a aussi porté sur la figure 2 le cercle de diamètre 40 mm centré sur le centre de la lentille, à l'intérieur duquel on considère le produit de la pente de sphère par le cylindre. A l'intérieur de ce cercle - c'est-à-dire sur le disque de diamètre 40 mm - le produit du cylindre par la pente de sphère est maximal au point de coordonnées x = 7 mm et y = -6,5 mm, où il atteint 0,06 $dioptrie^2/mm$. De ce fait, le rapport entre d'une part la valeur maximale du produit du cylindre par la norme du gradient de la sphère, sur un disque de 40 mm de diamètre centré sur le centre de la lentille, et d'autre part le carré de l'addition vaut 0,06 $mm^{-1}$. Ce rapport est bien inférieur à 0,08 $mm^{-1}$.

La figure 3 montre une carte de cylindre d'une lentille selon l'invention ; on utilise les mêmes conventions graphiques et les mêmes notations qu'à la figure 2, en portant sur la figure non pas la sphère, mais le cylindre. Du point de vue des lignes d'isocylindre, la figure 3 montre que les lignes sont bien espacées dans la zone de vision de loin, se resserrent dans la zone de vision intermédiaire, et sont de nouveau bien espacées, même à l'intérieur d'une monture de petite taille. Le cylindre au-dessus de la croix de montage est maximal au point de coordonnées x = 19,5 mm et y = 4 mm, où il atteint 0,37 dioptrie. Ce cylindre est bien inférieur à 0,5 fois l'addition, c'est-à-dire à 0,50 dioptrie, pour une addition d'une dioptrie.

La figure 4 montre une représentation en trois dimensions du produit de la pente de sphère par le cylindre, pour la lentille des figures 1 à 3. La méridienne est sensiblement horizontale sur la figure, et la zone de vision de loin est sur la droite. On remarque que le produit présente une valeur maximale dans les deux zones situées de part et d'autre de la zone de vision de près ; la zone de vision de loin est bien dégagée, ainsi que le couloir entourant la méridienne principale.

La figure 5 est une carte d'altitude de la lentille de la figure 1. On a porté sur la figure les altitudes de différents points de la surface, le long de l'axe z. Les points dont l'altitude apparaît sur la figure sont échantillonnés avec un pas de 2,5 mm suivant la direction x et suivant la direction y, à l'intérieur du cercle de diamètre 40 mm.

Les figures 6, 7 et 8 montrent respectivement un graphe de sphère moyenne le long de la méridienne, une carte de sphère moyenne et une carte de cylindre d'une lentille de l'état de la technique, d'addition une dioptrie ; on y a porté, pour les besoins de la comparaison, le cercle de diamètre 40 mm déjà représentée sur les figures 2 et 3. La figure 9 montre, comme la figure 4, une représentation du produit de la pente de sphère par le cylindre. Une simple comparaison de la figure 6 à la figure 1, de la figure 7 à la figure 2, de la figure 8 à la figure 3, ou de la figure 9 à la figure 4, met en évidence les problèmes de l'art antérieur pour les montures de petite taille, et la solution de l'invention.

La figure 9 montre que le produit du gradient par la sphère moyenne présente des maxima à des valeurs plus importantes, et des perturbations locales plus marquées.

Pour la lentille de l'état de la technique des figures 6 à 9, on trouve une longueur de progression de 11,9 mm et un rapport entre la valeur maximale du produit du cylindre par la norme du gradient de la sphère et le carré de l'addition qui vaut 0,23 $mm^{-1}$. La valeur maximale du cylindre au-dessus de la croix de montage est de 0,55 dioptrie, soit un rapport à l'addition de 0,55. Cet exemple comparatif montre que l'invention malgré une longueur de progression plus faible, permet de limiter les aberrations sur la surface asphérique de la lentille et dans la zone de vision de loin.

Dans une deuxième série de critères, l'invention propose de minimiser une quantité représentative de l'aberration sur la surface de la lentille ; cette quantité est l'intégrale du produit en chaque point de la pente de sphère par le cylindre. Cette quantité est manifestement nulle pour une lentille sphérique ; la pente de sphère est représentative des variations locales de la sphère, et est d'autant plus faible que la lentille est "douce", i.e. présente une progression qui n'est pas trop brutale. Il est toutefois nécessaire pour assurer une progression que la pente de sphère ne présente pas des valeurs non-nulles sur toute la lentille.

Le cylindre est représentatif de l'écart entre la surface locale et une surface sphérique ; il est intéressant qu'il reste faible dans la zone de la lentille utilisée pour la vision - ce qui en termes géométriques revient à "écarter" ou "élargir" les lignes d'isocylindre de la méridienne. Les variations de la sphère conduisent néanmoins nécessairement à des variations du cylindre.

Le produit de la pente de sphère par le cylindre représente un équilibre entre le contrôle des pentes de sphère, et la volonté d'élargir les isocylindres. Pour une lentille dans laquelle le maximum de pente de sphère se trouverait sur la méridienne et dans laquelle la méridienne serait une ligne ombilique, le produit serait nul sur la méridienne, et présenterait une valeur faible autour de celle-ci. En s'éloignant de la méridienne, les valeurs de cylindre peuvent augmenter, mais le produit peut rester faible si la pente de sphère est elle-même faible : ceci est préférable dans les zones éloignées de la méridienne, puisque la progression de sphère n'est en fait fonctionnelle que dans le couloir de progression autour de la méridienne. Le produit prend des valeurs importantes lorsque la pente de sphère est importante dans les zones d'aberrations, ce qui n'est pas souhaitable car la progression de sphère n'est fonctionnelle que dans le couloir de progression où le cylindre doit être faible.

Autrement dit, imposer une limite au produit de la pente de sphère par le cylindre sur la surface de la lentille implique de minimiser le cylindre dans la région fovéale, tout en minimisant la pente de sphère dans la région extra-fovéale. On assure à la fois une bonne vision fovéale, et une bonne vision périphérique. Le produit de la pente de sphère par le cylindre est donc une quantité représentative des aberrations sur la surface de la lentille.

L'intégrale est calculée sur la surface de la lentille à l'intérieur d'un cercle de diamètre 40 mm - soit un rayon de 20 mm autour du centre de la lentille ; ceci revient à exclure les zones de bord de la lentille, qui ne sont que peu ou pas utilisées par le porteur.

L'invention propose aussi de normaliser cette intégrale, pour obtenir une grandeur qui n'est pas fonction de l'addition. Le facteur de normalisation fait intervenir la pente maximale de la sphère sur la méridienne et l'addition. La valeur maximale de la pente de sphère sur la méridienne est un facteur adapté à la normalisation de la pente de sphère sur la surface de la lentille : de nouveau, la pente de sphère est fonctionnelle dans le couloir entourant la méridienne, et la pente de sphère est avantageusement maximale sur la méridienne. L'addition est un facteur adapté à la normalisation du cylindre : le cylindre est d'autant plus important que l'addition est importante - une lentille sphérique présentant un cylindre nul. Le produit est multiplié par l'aire du même cercle de diamètre 40 mm, de sorte à être homogène à l'intégrale du numérateur.

Ainsi, pour cette deuxième série de critères, l'invention propose d'imposer une contrainte sur la quantité suivante :

$$\frac{\iint_{cercle40} gradS.C.dS}{A.Aire_{cercle40}.Gradmer}$$

Dans cette formule, A représente l'addition, $Aire_{cercle40}$ l'aire du cercle de diamètre 40 mm, et Gradmer est le maximum du gradient de sphère gradS sur la partie de la méridienne qui est comprise dans ce cercle de diamètre 40 mm. Le gradient est défini de façon classique comme le vecteur dont les coordonnées suivant chaque axe sont respectivement égales aux dérivées partielles de la sphère moyenne suivant cet axe, et par abus de langage, on appelle gradient la norme du vecteur gradient, soit :

$$\mathrm{gradS} = \left\|\overrightarrow{grad}S\right\| = \sqrt{\left(\frac{\partial S}{\partial x}\right)^2 + \left(\frac{\partial S}{\partial y}\right)^2}$$

L'intégrale au numérateur est une intégrale surfacique sur l'ensemble du cercle de diamètre 40 mm centré sur le centre de la lentille ; la quantité au dénominateur est une normalisation. L'ensemble est sans dimension.

Il est avantageux que cette quantité normalisée soit aussi faible que possible. Diverses limites supérieures peuvent être proposées. Dans un premier mode de réalisation de l'invention, cette quantité normalisée est inférieure à une valeur k constante, qui vaut 0,14.

Dans une autre mode de réalisation, cette quantité normalisée est inférieure au produit

$$k'.\mathrm{Gradmer}/\mathrm{Gradmax}$$

avec

- Gradmer définie comme plus haut (la valeur maximale de la pente de la sphère sur la partie de la méridienne comprise dans le cercle de diamètre 40 mm) ; et
- Gradmax la valeur maximale de la pente de la sphère dans le cercle de diamètre 40 mm et
- k' un coefficient égal à 0,16. Ce coefficient est sans dimension, puisque Gradmer comme Gradmax sont de même dimension.

Cette limite sur la quantité normalisée se combine avec d'autres caractéristiques de la lentille. Le fait que la lentille est une lentille à progression courte peut s'écrire comme une contrainte sur la longueur de progression : la longueur de progression est représentative de la hauteur sur la lentille sur laquelle la sphère varie ; elle est d'autant plus faible que la sphère varie rapidement sur la lentille. La longueur de progression peut être définie comme la distance verticale entre la croix de montage et le point de la méridienne où la sphère moyenne est supérieure de 85 % de l'addition à la sphère moyenne au point de référence de la zone de vision de loin.

La lentille des figures 1 à 5 vérifie non seulement la première série de critères, comme expliqué plus haut, mais aussi la deuxième série de critères ; elle vérifie la deuxième série de critères dans le premier mode de réalisation (intégrale normalisée inférieure à 0,14) que dans le deuxième mode de réalisation (intégrale normalisée inférieure à k'.Gradmer/Gradmax).

Plus spécifiquement, pour cette lentille, la quantité Gradmer est atteinte au point de la méridienne d'ordonnée -3 mm, et elle vaut 0,11 dioptrie/mm. La quantité Gradmax est atteinte au point de coordonnées (7 mm, -9 mm), et vaut 0,11 dioptrie/mm. L'intégrale normalisée vaut 0,12 ; cette quantité est bien inférieure d'une part à 0,14 : la lentille vérifie donc la deuxième série de critères, dans le premier mode de réalisation. En outre, le rapport Gradmer/Gradmax vaut 1, et l'intégrale normalisée est bien inférieure à 0,16*1. La lentille vérifie donc la deuxième série de critères, dans le second mode de réalisation.

On détaille maintenant les différentes caractéristiques qui permettent de réaliser les différentes lentilles selon l'invention. La surface des lentilles est de façon connue en soi, continue et trois fois continûment dérivable. Comme cela est connu de l'homme du métier, la surface de consigne de lentilles progressives s'obtient par optimisation numérique à l'aide d'un calculateur, en fixant des conditions aux limites pour un certain nombre de paramètres de la lentille.

On peut utiliser comme conditions aux limites un ou plusieurs des critères définis plus haut, et notamment les critères de la revendication 1.

On peut aussi avantageusement commencer par définir, pour chacune des lentilles de la famille, une méridienne principale de progression. On peut utiliser à cet effet l'enseignement du brevet FR-A-2 683 642 susmentionné. On peut aussi utiliser toute autre définition de la méridienne principale de progression pour appliquer l'enseignement de l'invention. Avantageusement, la méridienne principale de progression est sensiblement confondue avec la ligne formée des milieux des segments horizontaux dont les extrémités ont une valeur de cylindre de 0,5 dioptrie. La lentille est ainsi symétrique horizontalement en termes de cylindre, par rapport à la méridienne. La vision latérale est favorisée.

Dans la description qui précède, on a considéré la définition de la méridienne proposée dans les demandes précédentes de la demanderesse ; on a aussi considéré la définition de la longueur de progression donnée plus haut. On peut choisir d'autres définitions de la méridienne.

Bien entendu, la présente invention n'est pas limitée à la présente description : entre autres, la surface asphérique pourrait être la surface dirigée vers le porteur des lentilles. Par ailleurs, on n'a pas insisté dans la description sur l'existence de lentilles qui peuvent être différentes pour les deux yeux. Enfin, si la description donne un exemple de lentille d'addition une dioptrie et de base 1,75 dioptries, l'invention s'applique aussi à des lentilles, quelle que soit la prescription du porteur. Plus généralement l'invention peut être appliquée à toute lentille présentant une variation de puissance.

Enfin, l'invention est décrite en référence à une lentille qui satisfait à la fois la première série de critères, et la deuxième série de critères. On peut aussi prévoir une lentille ne satisfaisant que les critères de la première série, ou encore ne satisfaisant que les critères de la deuxième série.

**Revendications**

**1.** Une lentille ophtalmique multifocale progressive, comportant une surface asphérique avec en tout point une sphère moyenne (S) et un cylindre (C), une zone de vision de loin, une zone de vision intermédiaire et une zone de vision de près, une méridienne principale de progression traversant ces trois zones, une addition égale à la différence de sphère moyenne entre un point de référence de la zone de vision de près et un point de référence de la zone de vision de loin, une longueur de progression inférieure à 12 mm, la longueur de progression étant égale à la distance verticale entre une croix de montage et le point de la méridienne où la sphère moyenne est supérieure de 85 % de l'addition à la sphère au point de référence pour la vision de loin, **caractérisée en ce que** le rapport entre

- l'intégrale du produit du cylindre par la norme du gradient de la sphère, sur un cercle de 40 mm de diamètre centré sur le centre géométrique de la lentille, d'une part et
- le produit de l'aire de ce cercle, de l'addition et de la valeur maximale de la norme du gradient de la sphère sur la partie de la méridienne comprise dans ce cercle, d'autre part,

est inférieur à 0,14.

**2.** Une lentille ophtalmique multifocale progressive, comportant une surface asphérique avec en tout point une sphère moyenne (S) et un cylindre (C), une zone de vision de loin, une zone de vision intermédiaire et une zone de vision de près, une méridienne principale de progression traversant ces trois zones, une addition égale à la différence de sphère moyenne entre un point de référence de la zone de vision de près et un point de référence de la zone de vision de loin, une longueur de progression inférieure à 12 mm, la longueur de progression étant égale à la distance verticale entre une croix de montage et le point de la méridienne où la sphère moyenne est supérieure de 85 % de l'addition à la sphère au point de référence pour la vision de loin, **caractérisée en ce que** le rapport entre

- l'intégrale du produit du cylindre par la norme du gradient de la sphère, sur un cercle de 40 mm de diamètre centré sur le centre géométrique de la lentille, d'une part, et
- le produit de l'aire de ce cercle, de l'addition et de la valeur maximale de la norme du gradient de la sphère sur la partie de la méridienne comprise dans ce cercle, d'autre part, est inférieur à 0,16 fois le rapport entre
- la valeur maximale de la norme du gradient de la sphère sur la partie de la méridienne comprise dans ce cercle ; et
- la valeur maximale de la norme du gradient de la sphère dans ce cercle.

**3.** La lentille de la revendication 1 ou 2, **caractérisée en ce que** le rapport entre

- le produit du cylindre par la norme du gradient de la sphère, d'une part et
- le carré de l'addition d'autre part

est inférieur à 0,08 $mm^{-1}$ en tout point d'un disque de 40 mm de diamètre centré sur le centre géométrique de la lentille, et
**en ce que** le cylindre dans la partie du disque située au-dessus d'une croix de montage est inférieur à 0,5 fois l'addition.

**4.** La lentille de la revendication 1, 2 ou 3, **caractérisée en ce que** la méridienne principale de progression est une ligne ombilique.

**5.** La lentille de la revendication 1, 2 ou 3, **caractérisée en ce que** la méridienne principale de progression est sensiblement formée des milieux de segments horizontaux reliant les lignes formées des points de cylindre 0,5 dioptrie.

**6.** La lentille de la revendication 1, 2 ou 3, **caractérisée en ce que** la méridienne principale de progression est formée de trois segments constituant une ligne brisée.

**7.** La lentille de la revendication 6, **caractérisée en ce que** le premier segment est vertical et présente comme extrémité inférieure la croix de montage.

**8.** La lentille de la revendication 6 ou 7, **caractérisée en ce que** le deuxième segment a comme extrémité supérieure la croix de montage, et forme avec la verticale un angle $\alpha$ fonction de l'addition.

**9.** La lentille de la revendication 8, **caractérisée en ce que** l'angle $\alpha$ est donné par $\alpha = f_1(A) = 1{,}574.A^2-3{,}097.A+12{,}293$, avec A l'addition.

**10.** La lentille de la revendication 6, 7 ou 8, **caractérisée en ce que** le deuxième segment présente une extrémité inférieure à une hauteur h qui est fonction de l'addition.

**11.** La lentille de la revendication 10, **caractérisée en ce que** la hauteur h de l'extrémité inférieure du deuxième segment est donnée en millimètres dans un repère centré sur le centre géométrique de la lentille par la fonction $h = f_2(A) = 0{,}340.A^2-0{,}425.A-6{,}422$, avec A l'addition.

**12.** La lentille de l'une des revendications 6 à 11, **caractérisée en ce que** le troisième segment forme avec la verticale un angle ω fonction de l'addition.

**13.** La lentille de la revendication 12, **caractérisée en ce que** l'angle ω est donné par $\omega = f_3(A) = 0{,}266.A^2-0{,}473.A+2{,}967$, avec A l'addition.

**Claims**

**1.** A progressive multifocal ophthalmic lens comprising an aspherical surface with at every point thereon a mean sphere (S) and a cylinder (C), a far vision region, an intermediate vision region and a near vision region, a main meridian of progression passing through said three regions, a power addition equal to a difference in mean sphere between a near vision region control point and a far vision region control point, a progression length less than 12 mm, progression length being equal to the vertical distance between a mounting center and a point on said meridian where mean sphere is greater than mean sphere at the far vision control point by 85% of the power addition value, in which the ratio between

- firstly, the integral of the product of cylinder times the norm of sphere gradient, on a 40 mm diameter circle centered on the geometric center of the lens, and
- secondly, the product of the area of said circle, power addition and a maximum value of the norm of sphere gradient over that part of the meridian comprised within said circle,

is less than 0.14.

**2.** A progressive multifocal ophthalmic lens comprising an aspherical surface with at every point thereon a mean sphere (S) and a cylinder (C), a far vision region, an intermediate vision region and a near vision region, a main meridian of progression passing through said three regions, a power addition equal to a difference in mean sphere between a near vision region control point and a far vision region control point, a progression length less than 12 mm, progression length being equal to the vertical distance between a mounting center and a point on said meridian where mean sphere is greater than mean sphere at the far vision control point by 85% of the power addition value,
in which the ratio between

- firstly, the integral of the product of cylinder times the norm of sphere gradient, on a 40 mm diameter circle centered on the geometric center of the lens, and
- secondly, the product of the area of this circle, power addition and a maximum value of the norm of sphere gradient on that part of the meridian comprised within said circle,

is less than 0.16 times the ratio between

- a maximum value of the norm of sphere gradient on that part of the meridian comprised within said circle; and
- a maximum value for the norm of sphere gradient within said circle.

**3.** The lens of claim 1 or 2, wherein a ratio between

- firstly, the product of cylinder times the norm of sphere gradient, and
- secondly, the square of power addition

is less than 0.08 $mm^{-1}$ at every point within a 40 mm diameter disc centered on the geometric center of the lens, and
wherein cylinder within that part of said disc situated above the mounting center is less than 0.5 times power addition.

**4.** The lens of claim 1, 2 or 3, wherein the main meridian of progression is an umbilical line.

**5.** The lens of claim 1, 2 or 3, wherein the main meridian of progression is substantially formed by the midpoints of horizontal segments joining lines formed by 0.5 diopter cylinder points.

**6.** The lens according to claim 1, 2 or 3, wherein the main meridian of progression is formed by three segments constituting a broken line.

**7.** The lens of claim 6, wherein the first segment is vertical and has the mounting center as its lower end.

**8.** The lens according to claim 6 or 7, wherein the upper end of the second segment is formed by the mounting center, said segment making an angle which is a function of power addition, with the vertical.

**9.** The lens of claim 8, wherein the angle α is given by $\alpha = f_1(A) = 1.574.A^2-3.097.A+12.293$, where A is power addition.

**10.** The lens of claim 6, 7 or 8, wherein the second segment has a lower end at a height h which is a function of power addition.

**11.** The lens of claim 10, wherein the height h of the lower end of said second segment is given, in mm, in a reference frame centered on the geometric center of the lens by the function $h = f_2(A) = 0.340.A^2-0.425.A-6.422$, where A is power addition.

**12.** The lens of one of claims 6 to 11, wherein the third segment makes an angle ω which is a function of power addition, with the vertical.

**13.** The lens of claim 12, wherein angle ω is given by $\omega = f_3(A) = 0.266.A^2 - 0.473.A + 2.967$, where A is power addition.

**Patentansprüche**

**1.** Ophtalmische multifokale Gleitschichtlinse, umfassend eine asphärische Fläche mit einer mittleren Flächenbrechkraft (S) und einem Flächenastigmatismus (C) an jedem Punkt, einem Fernsichtbereich, einem Zwischensichtbereich und einem Nahsichtbereich, einem Progressions-Hauptmeridian verlaufend durch die drei Zonen, eine Additon gleich der Differenz der mittleren Flächenbrechkraft zwischen einem Referenzpunkt der Nahsichtzone und einem Referenzpunkt der Fernsichtzone, eine Progressionslänge von weniger als 12 mm, wobei die Progressionslänge gleich dem vertikalen Abstand zwischen einem Montagekreuz und dem Punkt des Meridians ist, an dem die mittlere Flächenbrechkraft größer als 85% der Addition zu der Flächenbrechkraft am Referenzpunkt des Fernsichtbereichs ist, **dadurch gekennzeichnet, dass** das Verhältnis zwischen

- dem Integral des Produktes aus Flächenastigmatismus und dem normierten Gradienten der Flächenbrechkraft über einen Kreis von 40 mm Durchmesser, zentriert bezüglich der geometrischen Mitte der Linse einerseits, und
- dem Produkt aus der Fläche dieses Kreises, der Addition und dem Maximalwert des normierten Gradienten der Flächenbrechkraft auf dem Abschnitt des Meridians, der von dem Kreis umfasst wird, andererseits,

kleiner als 0,14 ist.

**2.** Ophtalmische multifokale Gleitschichtlinse, umfassend eine asphärische Fläche mit einer mittleren Flächenbrechkraft (S) und einem Flächenastigmatismus (C) an jedem Punkt, einem Fernsichtbereich, einem Zwischensichtbereich und einem Nahsichtbereich, einem Progressions-Hauptmeridian verlaufend durch die drei Zonen, eine Addition gleich der Differenz der mittleren Flächenbrechkraft zwischen einem Referenzpunkt der Nahsichtzone und einem Referenzpunkt der Fernsichtzone, eine Progressionslänge von weniger als 12 mm, wobei die Progressionslänge gleich dem vertikalen Abstand zwischen einem Montagekreuz und dem Punkt des Meridians ist, an dem die mittlere Flächenbrechkraft größer als 85% der Addition zu der Flächenbrechkraft am Referenzpunkt des Fernsichtbereichs ist, **dadurch gekennzeichnet, dass** das Verhältnis zwischen

- dem Integral des Produktes aus Flächenastigmatismus und dem normierten Gradienten der Flächenbrechkraft über einen Kreis von 40 mm Durchmesser zentriert bezüglich der geometrischen Mitte der Linse einerseits, und
- dem Produkt aus der Fläche dieses Kreises, der Addition und dem Maximalwert des normierten Gradienten der Flächenbrechkraft auf dem Abschnitt des Meridians, der von dem Kreis umfasst wird, andererseits,

kleiner als 0,16 mal dem Verhältnis zwischen

- dem Maximalwert des normierten Gradienten der Flächenbrechkraft auf dem Abschnitt des Meridians, der von dem Kreis umfasst wird, und
- dem Maximalwert des normierten Gradienten der Flächenbrechkraft in dem Kreis

ist.

**3.** Linse gemäß Anspruch 1 oder 2, **dadurch gekennzeichnet,**
**dass** das Verhältnis zwischen

- dem Produkt des Flächenastigmatismus und dem normierten Gradienten der Flächenbrechkraft einerseits, und
- dem Quadrat der Summe andererseits

kleiner als 0,08 $mm^{-1}$ an jeden Punkt der Scheibe/Kreisfläche von 40 mm Durchmesser, zentriert bezüglich der geometrischen Mitte der Linse, ist, und **dadurch**,
**dass** der Flächenastigmatismus oder Zylinder in dem Scheibenabschnitt, der Oberhalb eines Montagekreuzes angeordnet ist, kleiner als 0,5 mal die Addition ist.

**4.** Linse gemäß Anspruch 1, 2 oder 3, **dadurch gekennzeichnet, dass** der Progressions-Hauptmeridian eine umbilische Linie ist.

**5.** Linse gemäß Anspruch 1, 2 oder 3, **dadurch gekennzeichnet, dass** der Progressions-Hauptmeridian im Wesentlichen aus den Mitten von Horizontalsegmenten ausgebildet ist, welche die Linien verbinden, die von den 0,5 Dioptrien-Flächenastigmatismuspunkten ausgebildet werden.

**6.** Linse gemäß Anspruch 1, 2 oder 3, **dadurch gekennzeichnet, dass** der Progressions-Hauptmeridian aus drei Segmenten ausgebildet ist, welche eine gebrochene Linie darstellen.

**7.** Linse gemäß Anspruch 6, **dadurch gekennzeich-**

**net, dass** das erste Segment vertikal ist und als unteres Ende das Montagekreuz aufweist.

**8.** Linse gemäß Anspruch 6 oder 7, **dadurch gekennzeichnet, dass** der zweite Abschnitt als oberes Ende das Montagekreuz hat und mit der Vertikalen einen Winkel $\alpha$ als Funktion der Addition ausbildet.

**9.** Linse gemäß Anspruch 8, **dadurch gekennzeichnet, dass** der Winkel $\alpha$ durch $\alpha = f_1(A) = 1{,}574\ A^2 - 3{,}097\ A + 12{,}293$ gegeben ist, wobei A die Addition ist.

**10.** Linse gemäß Anspruch 6, 7 oder 8, **dadurch gekennzeichnet, dass** das zweite Segment ein unteres Ende auf einer Höhe h aufweist, die eine Funktion der Addition ist.

**11.** Linse gemäß Anspruch 10, **dadurch gekennzeichnet, dass** die Höhe h des unteren Endes des zweiten Segments in Millimetern durch einen Markierungspunkt, der in dem geometrischen Zentrum der Linse zentriert ist, durch die Funktion $h = f_2(A) = 0{,}340\ A^2 - 0{,}425\ A + 6{,}422$ gegeben ist, wobei A die Addition ist.

**12.** Linse gemäß einem der Ansprüche 6 bis 11, **dadurch gekennzeichnet, dass** das dritte Segment mit der Vertikalen einen Winkel $\omega$ als Funktion der Addition ausbildet.

**13.** Linse gemäß Anspruch 10, **dadurch gekennzeichnet, dass** der Winkel $\omega$ durch $\omega = f_3(A) = 0{,}266\ A^2 - 0{,}473\ A + 2{,}967$ gegeben ist, wobei A die Addition ist.

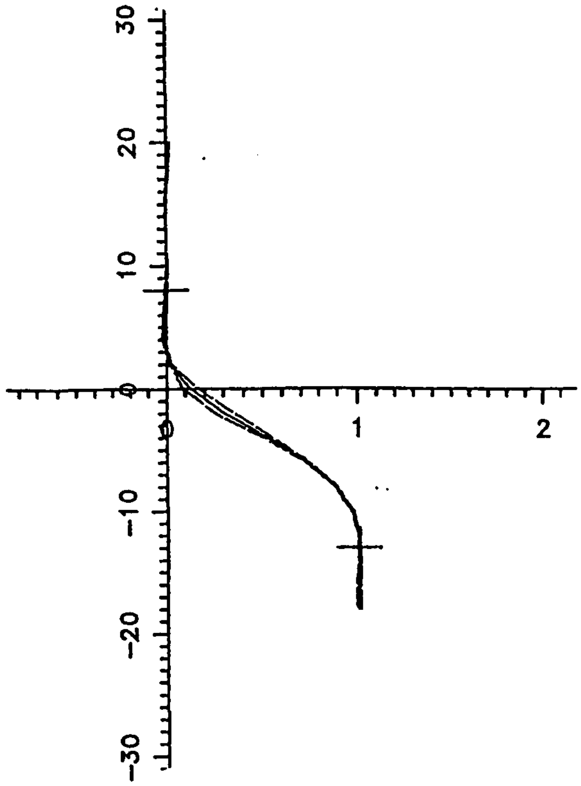


Fig. 1

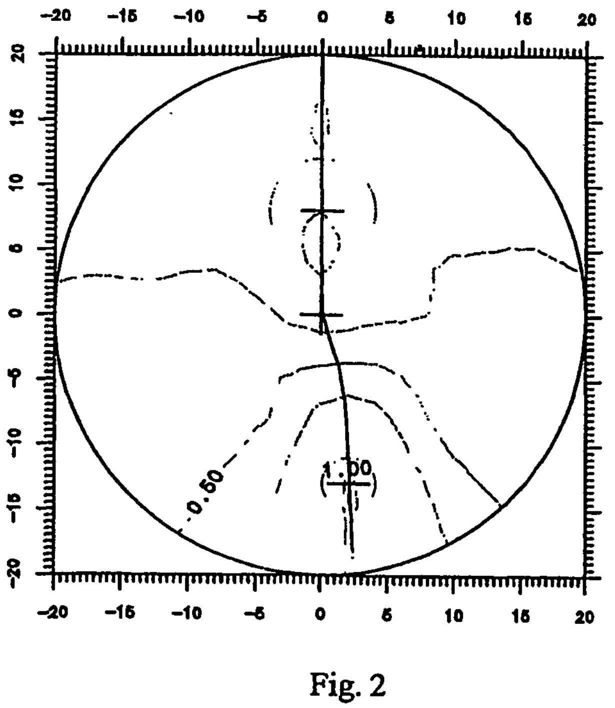


Fig. 2

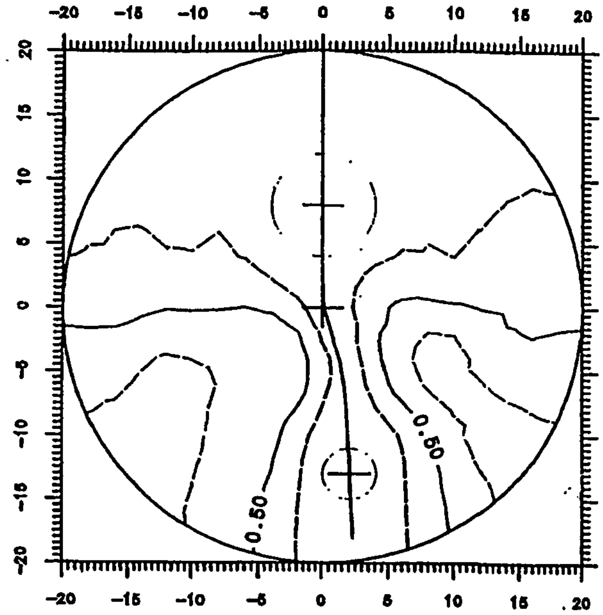


Fig. 3

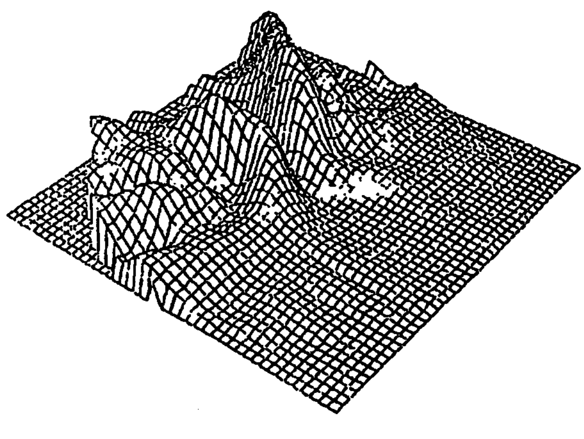

Fig. 4

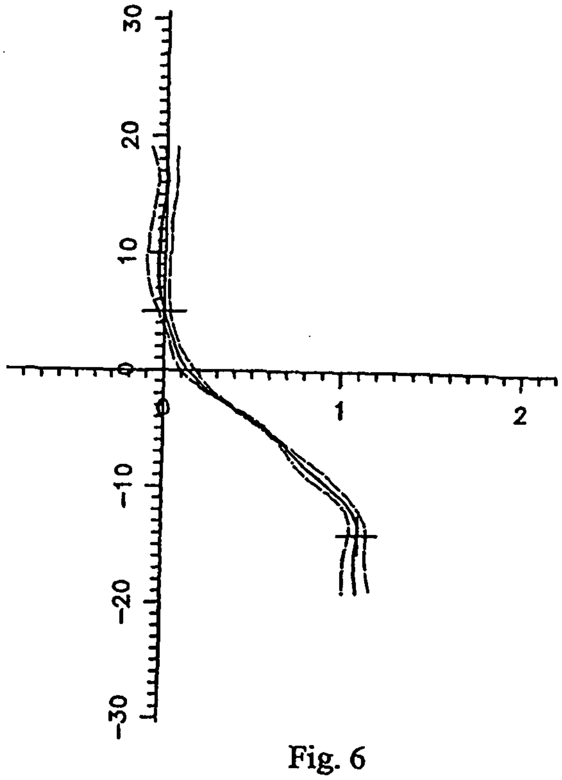


Fig. 6

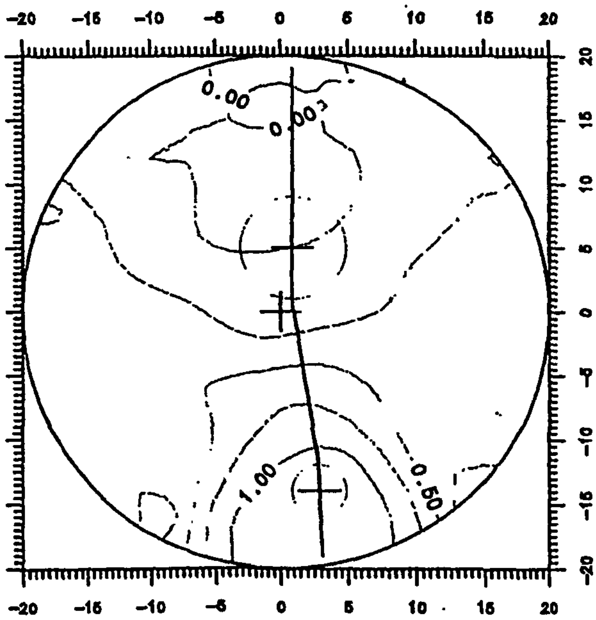


Fig. 7

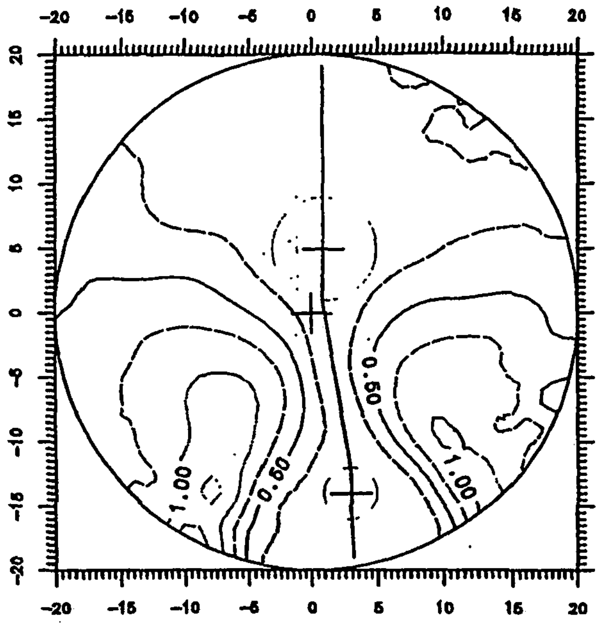


Fig. 8

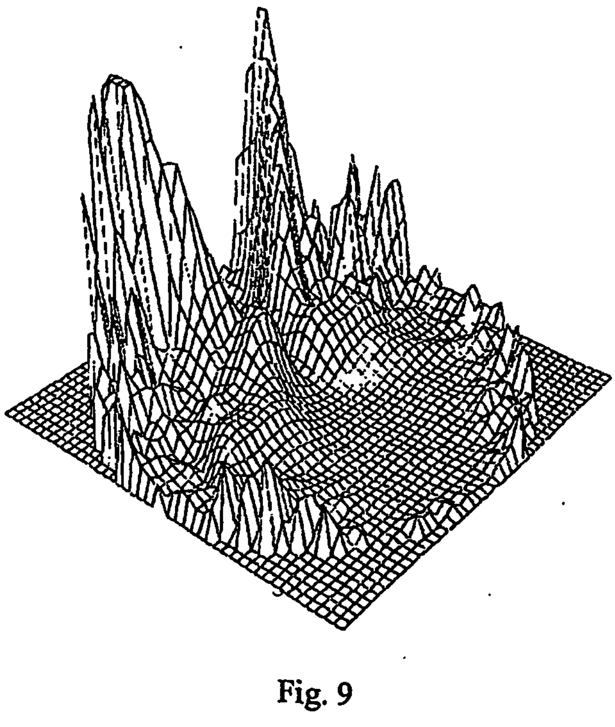

Fig. 9

| | | | | | | | | | | | | | | | | |
|---|---|---|---|---|---|---|---|---|---|---|---|---|---|---|---|---|
| | | | | | | | | 1.938 | | | | | | | | |
| | | | | | 1.764 | 1.606 | 1.508 | 1.471 | 1.497 | 1.589 | 1.743 | | | | | |
| | | | 1.844 | 1.574 | 1.361 | 1.204 | 1.107 | 1.070 | 1.096 | 1.187 | 1.341 | 1.556 | 1.829 | | | |
| | | 1.820 | 1.499 | 1.233 | 1.022 | 0.868 | 0.771 | 0.734 | 0.761 | 0.851 | 1.004 | 1.217 | 1.489 | 1.816 | | |
| | | 1.534 | 1.217 | 0.954 | 0.746 | 0.595 | 0.499 | 0.464 | 0.490 | 0.580 | 0.732 | 0.943 | 1.211 | 1.534 | | |
| | 1.677 | 1.308 | 0.995 | 0.736 | 0.532 | 0.383 | 0.291 | 0.257 | 0.284 | 0.372 | 0.522 | 0.730 | 0.994 | 1.312 | 1.687 | |
| | 1.510 | 1.144 | 0.834 | 0.579 | 0.378 | 0.233 | 0.144 | 0.112 | 0.139 | 0.227 | 0.373 | 0.577 | 0.836 | 1.151 | 1.523 | |
| | 1.406 | 1.042 | 0.734 | 0.481 | 0.283 | 0.142 | 0.057 | 0.028 | 0.055 | 0.140 | 0.283 | 0.482 | 0.737 | 1.050 | 1.419 | |
| 1.812 | 1.363 | 1.000 | 0.694 | 0.443 | 0.248 | 0.110 | 0.027 | 0.000 | 0.027 | 0.110 | 0.249 | 0.445 | 0.697 | 1.007 | 1.374 | 1.798 |
| | 1.379 | 1.018 | 0.713 | 0.463 | 0.270 | 0.134 | 0.053 | 0.027 | 0.054 | 0.135 | 0.272 | 0.465 | 0.715 | 1.023 | 1.388 | |
| | 1.453 | 1.092 | 0.788 | 0.540 | 0.349 | 0.213 | 0.133 | 0.107 | 0.133 | 0.214 | 0.349 | 0.541 | 0.790 | 1.096 | 1.460 | |
| | 1.582 | 1.223 | 0.920 | 0.673 | 0.482 | 0.346 | 0.266 | 0.240 | 0.267 | 0.347 | 0.482 | 0.673 | 0.921 | 1.226 | 1.588 | |
| | | 1.408 | 1.106 | 0.859 | 0.668 | 0.533 | 0.453 | 0.426 | 0.453 | 0.533 | 0.669 | 0.860 | 1.107 | 1.412 | | |
| | | 1.648 | 1.346 | 1.099 | 0.908 | 0.773 | 0.693 | 0.666 | 0.693 | 0.774 | 0.909 | 1.101 | 1.348 | 1.652 | | |
| | | | 1.641 | 1.394 | 1.203 | 1.068 | 0.987 | 0.961 | 0.987 | 1.068 | 1.204 | 1.396 | 1.644 | | | |
| | | | | | 1.552 | 1.416 | 1.336 | 1.309 | 1.336 | 1.417 | 1.553 | | | | | |
| | | | | | | | | 1.712 | | | | | | | | |

Fig. 5